# DEMANDE DE BREVET EUROPEEN

(11) **EP 0 569 645 A1**
(43) Date de publication de la demande: **18.11.1993**
(21) Numéro de dépôt: 92401299.0
(22) Date de dépôt: 12.05.1992
(51) Int. Cl.: H04Q 7/24

(54) **Dispositif et procédé d'interconnexion téléphoniques destinés à offrir une continuité de service dans un réseau de communication à stations autonomes**

(71) Demandeur: DASSAULT AUTOMATISMES ET TELECOMMUNICATIONS, F-78370 Plaisir (FR)
(72) Inventeur: Le Bastard, Jean, F-78150 Le Chesnay (FR); Soupirot, Joel, F-07800 La Voulte (FR)
(74) Mandataire: Plaçais, Jean-Yves

(57) **Abrégé**

Dans un réseau de communication entre stations fixes et bornes fixes, lesdites stations fixes étant reliées aux canaux téléphoniques tandis que les bornes fixes comportent une antenne pour la coopération mutuelle à distance avec des stations autonomes, on prévoit : des moyens de raccordement aux canaux téléphoniques du réseau, et on établit une relation téléphonique entre une station autonome (SA) et une autre station (SF) reliée aux canaux téléphoniques du réseau, par l'intermédiaire d'une liaison primaire entre la station autonome (SA) et les moyens de raccordement, via l'antenne d'une borne fixe primaire (BFR1). On choisit une borne fixe secondaire (BFR2) en fonction de critères de sélection prédéterminés, et on établit une liaison secondaire entre la station autonome (SA) et lesdits moyens de raccordement, via l'antenne de ladite borne fixe secondaire (BFR2). En réponse à une condition-station prédéterminée, relative à ladite liaison primaire, on génère à partir de la station-autonome une information de requête prédéterminée et, en réponse à la réception de ladite information de requête, on commute ladite relation téléphonique pour qu'elle passe par cette liaison secondaire.

## Description

L'invention concerne la téléphonie.

Elle est plus particulièrement destinée à servir dans un réseau de communication entre stations fixes, telles que des postes téléphoniques, et bornes fixes, lesdites stations fixes étant reliées aux canaux téléphoniques du réseau tandis que les bornes fixes comportent des moyens formant antenne (plus simplement dénommés "antenne" dans la suite du texte) pour la coopération mutuelle à distance avec des stations autonomes, telles que des combinés téléphoniques portatifs.

Un tel réseau est par exemple celui connu sous la Marque déposée POINTEL et l'invention y trouve une application particulièrement avantageuse mais non limitative.

Le réseau POINTEL ne permet pas, dans sa définition actuelle, d'offrir à l'usager d'un combiné portatif la continuité de service, lorsque celui-ci se déplace, même si l'ensemble des bornes fixes situées au voisinage de l'usager assurent une couverture radiofréquence complète. En effet, il est prévu actuellement que la communication téléphonique en cours soit rompue dès que l'usager sort de la zone radiofréquence couverte par la borne fixe ayant initialisé la liaison radiofréquence de cette communication téléphonique.

L'invention vise à apporter une solution à ce problème.

Selon une caractéristique générale de l'invention, le dispositif téléphonique, destiné à servir dans un réseau de communication du type de celui évoqué ci-avant, comprend :
- des moyens d'interface avec les antennes d'une pluralité de bornes fixes,
- des moyens de raccordement aux canaux téléphoniques du réseau, et
- des moyens spécifiques reliés aux moyens d'interface et de raccordement, propres :
   à établir une relation téléphonique entre une station autonome et une autre station, en principe un poste téléphonique fixe, reliée aux canaux téléphoniques du réseau, par l'intermédiaire d'une liaison primaire entre la station autonome et les moyens de raccordement, via l'antenne d'une borne fixe primaire,
   à établir au moins une liaison secondaire entre la station autonome et lesdits moyens de raccordement, via l'antenne d'une borne fixe secondaire, choisie en fonction de critères de sélection prédéterminés,
- des moyens d'analyse-station, incorporés dans la station autonome, propres à générer une information de requête prédéterminée en réponse à une condition-station prédéterminée relative à la liaison primaire .

Les moyens spécifiques sont alors, en outre, propres à répondre à la réception de cette information de requête en commutant ladite relation téléphonique pour qu'elle passe par cette liaison.

Cette borne fixe secondaire est avantageusement sélectionnable parmi un groupe choisi de bornes voisines de la borne fixe primaire.

Selon un mode de réalisation du dispositif, les moyens d'interface comportent, avec respectivement les antennes des bornes fixes primaire et secondaire, des premiers étages d'interfaces primaire et secondaire pour une pluralité de canaux radiofréquences, tandis que les moyens spécifiques comportent :
- des moyens de traitement-borne primaires, reliés audit étage d'interface primaire, propres à établir, au sein de ladite liaison primaire, un lien radiofréquence primaire entre la station autonome et l'antenne sur l'un au moins des canaux radiofréquences de cette borne fixe primaire, à caractériser ce lien radiofréquence primaire de façon biunivoque par un identifiant de liaison, et à délivrer cet identifiant de liaison à un deuxième étage d'interface primaire,
- des moyens de transfert reliés à ce deuxième étage interface primaire, propres à recevoir ledit identifiant de liaison et à communiquer à un deuxième étage d'interface secondaire, situé au niveau de la borne fixe secondaire, une information de liaison contenant au moins cet identifiant de liaison, et
- des moyens de traitement-borne secondaires, reliés auxdits premier et deuxième étages d'interfaces secondaires, propres à établir, au sein de ladite liaison secondaire, un lien radiofréquence secondaire entre la station autonome et l'antenne sur l'un au moins des canaux radiofréquences de cette borne fixe secondaire, à l'aide dudit identifiant de liaison.

L'information de requête contient alors avantageusement cet identifiant de liaison.

Les critères de sélection de la borne fixe secondaire peuvent résulter de l'analyse d'au moins une première caractéristique déduite du signal radiofréquence primaire transmis au cours du lien radiofréquence primaire sur l'un au moins des canaux radiofréquences de la borne fixe primaire, et de l'analyse d'au moins une deuxième caractéristique déduite de ce signal radiofréquence primaire.

Cette première caractéristique est de préférence la détermination du niveau dudit signal radiofréquence primaire en la borne fixe primaire tandis que la deuxième caractéristique comporte de préférence la détermination du niveau de l'activité radiofréquence, résultant de la transmission du signal radiofréquence primaire, sur le canal radiofréquence associé à la borne fixe secondaire, homologue du canal radiofréquence associé à la borne fixe primaire, sur lequel est transmis ledit signal radiofréquence primaire.

Selon un mode de réalisation de l'invention, au moins une partie des constituants du dispositif peuvent être incorporés dans au moins un module spécifique.

Il est également possible que ces constituants soient incorporés au sein de certaines au moins des unités de raccordement de bornes fixes appartenant au réseau de communication.

L'invention a également pour objet un procédé d'interconnexion téléphonique, destiné à servir dans un réseau de communication du type de celui évoqué ci-avant, caractérisé en ce qu'on prévoit :
- des moyens de raccordement aux canaux téléphoniques du réseau,
   en ce qu'on établit une relation téléphonique entre une station autonome et une autre station reliée aux canaux téléphoniques du réseau, par l'intermédiaire d'une liaison primaire entre la station autonome et les moyens de raccordement, via l'antenne d'une borne fixe primaire,
   en ce qu'on choisit une borne fixe secondaire en fonction de critères de sélection prédéterminés,
   en ce qu'on établit une liaison secondaire entre la station autonome et lesdits moyens de raccordement, via l'antenne de ladite borne fixe secondaire,
   en ce qu'en réponse à une condition-station prédéterminée, relative à ladite liaison primaire, on génère à partir de la station-autonome une information de requête prédéterminée, et en ce qu'en réponse à la réception de ladite information de requête, on commute ladite relation secondaire.

D'autres avantages et caractéristiques de l'invention apparaîtront à l'examen de la description détaillée ci-après et des dessins annexés sur lesquels :
- la figure 1 représente un synoptique schématique d'un réseau de communication du genre POINTEL de l'art antérieur ;
- la figure 2 représente un synoptique schématique d'une première configuration d'un réseau de communication équipé de moyens selon l'invention ;
- la figure 3 représente un synoptique schématique d'un module spécifique appartenant au dispositif selon l'invention ;
- les figures 4, 5 et 6 illustrent schématiquement d'autres moyens du dispositif selon l'invention ; et
- la figure 7 représente une deuxième configuration d'un réseau de communication équipé de moyens selon l'invention.

Les dessins comportent pour l'essentiel des éléments de caractère certain. A ce titre, ils pourront non seulement servir à mieux faire comprendre la description détaillée ci-après mais aussi contribuer, le cas échéant, à la définition de l'invention.

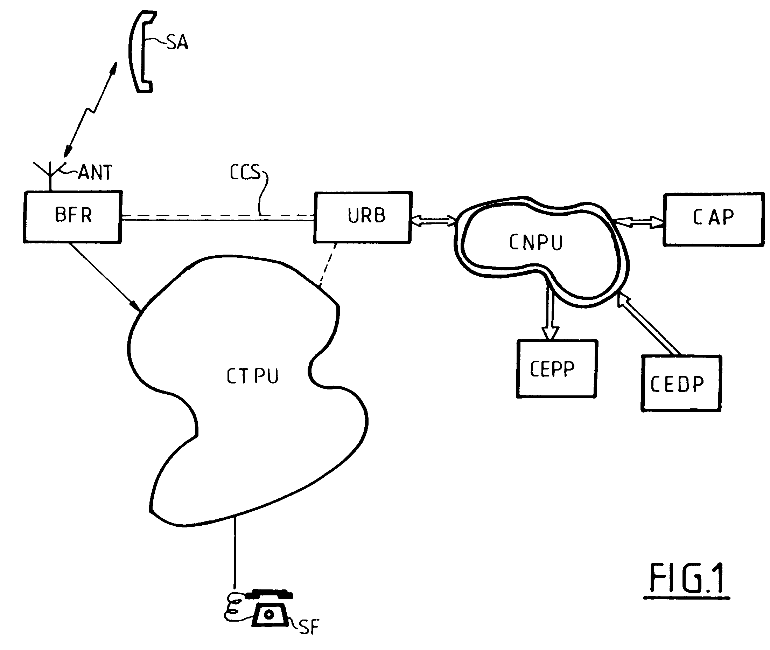

On suppose maintenant que l'invention s'applique au réseau POINTEL dont on va maintenant décrire très brièvement la structure prévue jusqu'à maintenant en se référant à la figure 1.

Des stations autonomes SA, telles que des combinés téléphoniques portatifs, sont capables de coopération mutuelle à distance par canal radio avec des antennes ANT de bornes fixes radio BFR.

Les échanges radiofréquences entre les stations autonomes et les bornes sont régis par une norme d'origine britannique dite "CAI" ("Common Air Interface"). Les échanges se font par modulation de fréquence à raison d'une bande de fréquence par communication radio.

Ces bornes fixes BFR sont connectées à des unités de raccordement de bornes URB par un canal de commande spécialisé CCS. Chaque unité de raccordement de bornes gère ainsi un groupe de bornes fixes BFR.

Une borne fixe peut être directement connectée aux canaux téléphoniques CTPU du réseau téléphonique commuté public. Dans ce cas l'unité URB qui la gère n'est pas raccordée à ces canaux téléphoniques.

Une borne fixe peut ne pas être directement connectée aux canaux téléphoniques CTPU. Dans ce cas, son raccordement s'effectue par l'intermédiaire de son unité de raccordement qui est alors directement connectée aux canaux CTPU.

Chaque borne fixe BFR ne peut qu'émettre des appels téléphoniques vers les canaux téléphoniques CTPU mais peut bien sûr émettre ou recevoir des appels radio à destination ou en provenance des stations autonomes SA.

Le réseau de communication comprend, outre les canaux téléphoniques CTPU, un milieu de communication numérique CNPU, en principe de fonctionnement par paquets, tel que le réseau TRANSPAC (Marque déposée). Dans la suite du texte, l'expression "milieu de communication" sera remplacée par le terme "canal" à des fins d'homogénéité, bien que l'homme du métier sache que la signification du terme "canal" peut ne pas être la même que dans le cas des canaux téléphoniques.

Sur ces canaux de signalisation numériques CNPU sont raccordés les différentes unités URB ainsi que d'autres constituants du réseau POINTEL désignés sous les rérérences CAP, CEPP et CEDP.

Le centre d'autorisation POINTEL CAP gère notamment, pour l'ensemble du réseau POINTEL, les abonnements et donc les autorisations des usagers POINTEL à appeler une station fixe SF raccordée aux canaux téléphoniques CTPU, depuis une station autonome. A cet effet, les unités de raccordement de bornes URB sont reliées au centre CAP par les canaux numériques CNPU.

Les unités de raccordement URB sont également reliées au centre d'exploitation principal POINTEL CEPP, par les canaux numériques CNPU, aux fins de transferts d'informations relatives aux communications téléphoniques échangées afin que le centre CEPP puisse transmettre ces informations à un système de facturation.

Les centres d'exploitation décentralisés POINTEL CEDP sont des organes de gestion destinés à superviser régionalement le fonctionnement du réseau et à détecter notamment les anomalies de fonctionnement des unités de raccordement URB et/ou des bornes fixes BFR.

Il est à noter que les centres CEDP peuvent communiquer, par l'intermédiaire des canaux numériques, des informations aux centres CEPP à des fins de supervision nationale.

Lorsqu'une communication téléphonique est échangée entre une station autonome SA et une station fixe SF, il s'établit un lien radiofréquence entre cette station autonome et la borne fixe BFR dont la zone radiofréquence couverte par cette borne fixe contient cette station autonome. Par ailleurs, la borne fixe peut se raccorder au réseau téléphonique commuté public directement, ou bien par l'intermédiaire de l'unité de raccordement URB qui la gère, selon la configuration de raccordement du réseau adopté.

Comme déjà évoqué précédemment, lorsque l'usager porteur de la station autonome SA sort de la zone couverte par la borne BFR ayant initialisé le lien radiofréquence, la communication téléphonique en cours est rompue.

Le réseau POINTEL, dans sa définition actuelle, ainsi que la norme CAI ne permettent pas alors d'offrir à cet usager la possibilité que la communication radio soit automatiquement relayée par une autre borne que celle ayant initialisé cette communication.

Le but principal de l'invention est donc de pallier cette lacune.

A cet effet, d'une façon générale, on prévoit :
- des moyens d'interface avec les antennes d'une pluralité de bornes fixes,
- des moyens de raccordement aux canaux téléphoniques du réseau,
- des moyens spécifiques, reliés aux moyens d'interface et de raccordement, propres
   à établir une relation téléphonique entre une station autonome et une autre station, par exemple une station fixe, reliée aux canaux téléphoniques du réseau, par l'intermédiaire d'une liaison primaire entre la station autonome et les moyens de raccordement, via l'antenne d'une borne fixe primaire,
   à établir au moins une liaison secondaire entre la station autonome et lesdits moyens de raccordement, via l'antenne d'une borne fixe secondaire, choisie en fonction de critères de sélection prédéterminés, et
- des moyens d'analyse-station, incorporés dans la station autonome, propres à générer une information de requête prédéterminée relative à la liaison primaire ;
   les moyens spécifiques sont alors propres à répondre à la réception de ladite information de requête, en principe en la borne secondaire, en commutant ladite relation téléphonique pour qu'elle passe par cette liaison secondaire.

Afin d'établir les différentes liaisons, les moyens d'interface comportent, avec respectivement les antennes des bornes fixes primaire et secondaire, des premiers étages d'interfaces primaire et secondaire pour une pluralité de canaux radiofréquence.

Il est alors prévu que les moyens spécifiques comportent :
- des moyens de traitement-borne primaires, reliés audit premier étage interface primaire de la borne fixe primaire, propres à établir, au sein de ladite liaison primaire, conformément à la norme CAI, un lien radiofréquence primaire entre la station autonome et l'antenne de cette borne fixe, sur l'un au moins de ces canaux radiofréquence.

Les moyens de traitement-borne primaires caractérisent alors, conformément à la norme CAI, ce lien radiofréquence primaire de façon biunivoque par un identifiant de liaison LID1. Cet identifiant de liaison est différent de l'identifiant LID du réseau de communication POINTEL qui a, par exemple été émis par la station autonome SA lorsque l'usager a souhaité se connecter au réseau POINTEL dans le but notamment d'appeler une autre station. On verra plus loin que, selon l'invention, l'information de requête contient cet identifiant de liaison LID1 et que les moyens spécifiques vont l'utiliser pour rétablir la communication téléphonique lorsque l'usager sortira éventuellement de la zone de couverture radio de la borne fixe primaire.

Après avoir extrait cet identifiant de liaison LID1, les moyens de traitement-borne primaires le délivrent à un deuxième étage d'interface primaire.

Les moyens spécifiques comportent également des moyens de transfert, reliés à ce deuxième étage d'interface primaire, propres à recevoir cet identifiant de liaison LID1 et à le communiquer à un deuxième étage d'interface secondaire, situé au niveau de la borne fixe secondaire. En fait, ces moyens de transfert sont propres à communiquer une information de liaison INFL contenant outre cet identifiant de liaison d'autres éléments d'informations que l'on détaillera plus loin.

Enfin, il est prévu des moyens de traitement-borne secondai res, reliés auxdits premier et deuxième étages interfaces secondaires, et propres à établir, au sein de la liaison secondaire, un lien radiofréquence secondaire entre la station autonome et l'antenne de cette borne fixe secondaire sur l'un au moins de ces canaux radiofréquence à l'aide dudit identifiant de liaison LID1.

On verra plus loin que les premier et deuxième étages d'interfaces primaires, ainsi que les moyens de traitement-borne primaires sont avantageusement incorporés dans la borne fixe primaire tandis que les premier et deuxième étages d'interfaces secondaires ainsi que les moyens de traitement-borne secondaires sont incorporés dans la borne fixe secondaire.

De même, les moyens de transfert sont de préférence incorporés dans ladite ou lesdites unités de raccordement gérant les bornes fixes primaires et secondaires.

Il est possible, comme on le verra ci-après, que la borne fixe primaire soit reliée à une unité de raccordement primaire tandis que la borne fixe secondaire est reliée à une unité de raccordement secondaire distincte. Dans ce cas, les moyens de transfert comportent, au sein de l'unité de raccordement primaire, des moyens d'interface numériques primaires reliés aux canaux numériques du réseau et, au sein de l'unité de raccordement secondaire, des moyens d'interface numériques secondaires reliés à ces mêmes canaux numériques. Les moyens de transfert transmettent alors ladite information de liaison INFL contenant l'identifiant de liaison LID1, entre les unités de raccordement primaires et secondaires, par l'intermédiaire des canaux numériques et des moyens d'interface numérique primaires et secondaires.

Le lien radiofréquence primaire comporte la transmission d'un signal radiofréquence primaire sur l'un au moins des canaux radiofréquence.

Ladite condition-station, en réponse de laquelle les moyens d'analyse-station vont émettre l'information de requête (identifiant de liaison LID1), est alors relative à l'une au moins des caractéristiques de ce signal radiofréquence primaire.

Conformément à la norme CAI, le signal radiofréquence primaire comporte un canal de phonie et un canal de signalisation. Le message téléphonique, supporté par le signal radiofréquence primaire, comporte une partie spécifique de signalisation (Handshake en langue anglaise) véhiculée par le canal de signalisation, ainsi qu'une partie, dite utile, véhiculée par le canal de phonie. La partie spécifique de signalisation permet de vérifier l'état de la liaison radioélectrique.

Il est alors prévu que les moyens d'analyse-station analysent la présence de cette partie spécifique, et, effectuent une transmission radiofréquence de l'identifiant de liaison LID1 (information de requête) en l'absence de cette partie spécifique. Cette absence peut résulter d'une sortie de la zone de couverture radio de la borne ou bien d'une mauvaise qualité de transmission radiofréquence conduisant à une partie spécifique incompréhensible de la part de la station autonome.

Outre les moyens déjà évoqués, les moyens spécifiques comportent des premiers moyens d'analyse d'au moins une première caractéristique déduite de ce signal radiofréquence primaire.

Cette première caractéristique peut alors consister en la détermination du niveau dudit signal radiofréquence primaire au niveau du premier étage primaire de la borne fixe primaire.

Il est également prévu que les moyens spécifiques comportent des deuxièmes moyens d'analyse propres à analyser, au niveau dudit premier étage secondaire, au moins une deuxième caractéristique déduite du signal radiofréquence primaire. Les critères de sélection de la borne fixe secondaire peuvent résulter alors des analyses des premiers et deuxièmes moyens d'analyse.

La deuxième caractéristique est avantageusement la détermination du niveau de l'activité radiofréquence sur le canal radiofréquence dudit premier étage secondaire, homologue du canal radiofréquence du premier étage primaire sur lequel est transmis ledit signal radiofréquence primaire. Cette activité radiofréquence résulte alors de la transmission de ce signal radiofréquence primaire.

En d'autres termes, la borne secondaire ou d'autres bornes peuvent percevoir une activité radiofréquence lors de la transmission du signal radiofréquence primaire entre la station autonome et la borne fixe primaire.

Les critères de sélection de la borne fixe secondaire, peuvent comprendre également, en variante, la réception de l'information de requête en cette borne.

On verra plus loin qu'il est possible que les moyens de transfert communiquent ladite information de liaison INFL à la borne fixe secondaire, ou à toutes les bornes du groupe choisi de bornes voisines de la borne fixe primaire parmi lesquelles est sélectionnable la borne secondaire, avant la réception de ladite information de requête.

Il est également possible, en variante, que ces moyens de transfert communiquent l'information de liaison INFL à la borne fixe secondaire après la réception de l'information de requête.

En ce qui concerne le raccordement aux canaux téléphoniques du réseau, il est prévu que les moyens de raccordement comportent :
- un premier bloc d'interfaces relié aux canaux téléphoniques du réseau,
- un deuxième bloc d'interfaces relié à certaines au moins des bornes fixes du réseau, et
- des moyens d'interconnexion entre ces interfaces.

Les moyens spécifiques comportent alors des moyens de traitement spécifiques reliés à ces blocs d'interfaces ainsi qu'aux moyens d'interconnexion.

Ces moyens de traitement spécifiques sont alors propres à :
- établir :
   1) un lien téléphonique-station entre une première interface du premier bloc d'interfaces et ladite autre station, en principe le poste téléphonique fixe,
   2) un lien téléphonique primaire entre une première interface du deuxième bloc d'interfaces et un troisième étage d'interface primaire de la borne fixe primaire, et
   3) un lien téléphonique secondaire entre une deuxième interface du deuxième bloc d'interfaces et un troisième étage d'interface secondaire de la borne fixe secondaire,
- établir ladite relation téléphonique en autorisant l'interconnexion entre la première interface du premier bloc et la première interface du deuxième bloc, puis à
- autoriser l'interconnexion entre ladite première interface du premier bloc et la deuxième interface du deuxième bloc pour commuter ladite relation téléphonique.

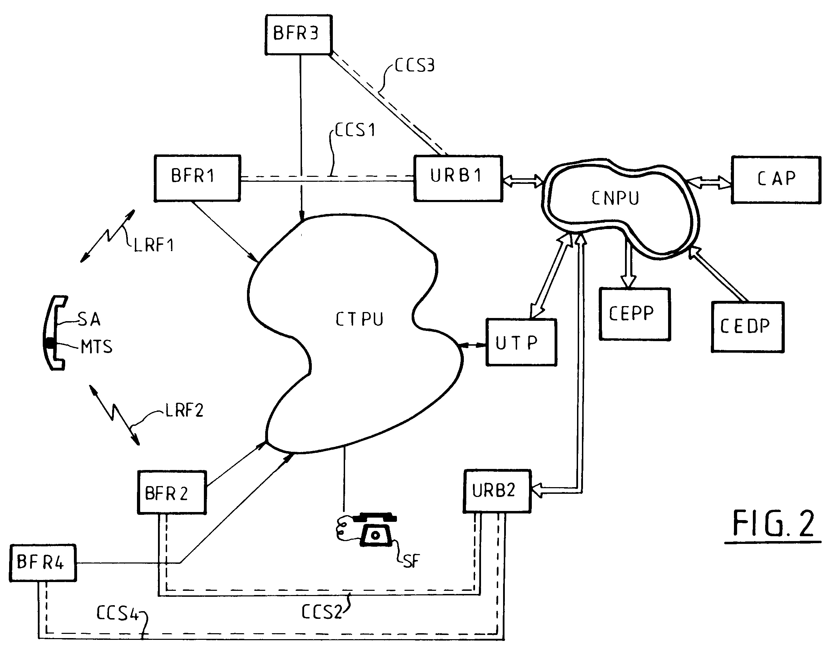

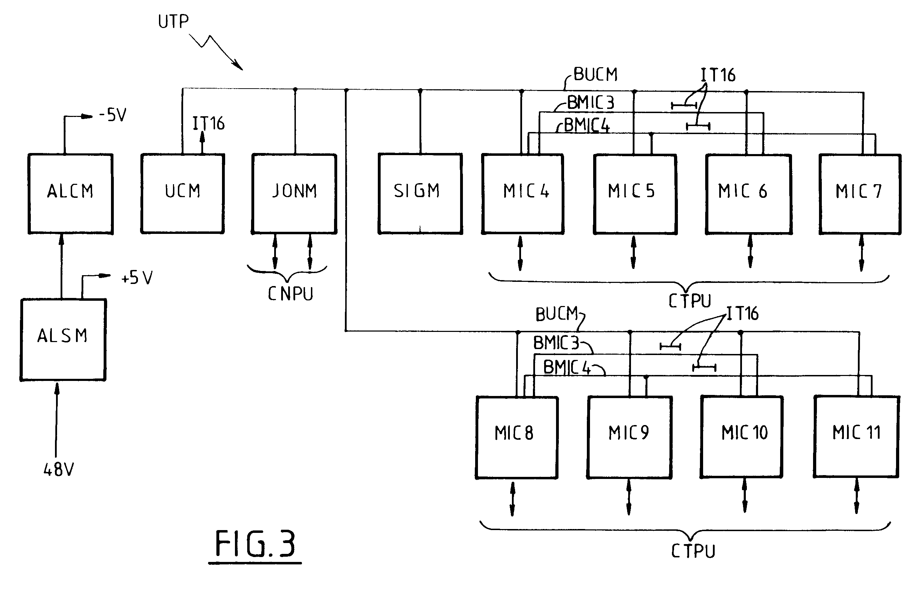

Après avoir exposé les principales caractéristiques d'ordre général du dispositif selon l'invention, il est maintenant fait référence aux figures 2 à 6 pour illustrer une première configuration du réseau de communication dans laquelle il est prévu au moins un module spécifique UTP incorporant au moins les premier et deuxième blocs d'interfaces, les moyens d'interconnexion et les moyens de traitement spécifiques.

Il est prévu que le dispositif comprenne une pluralité de modèles spécifiques affectés respectivement à des secteurs de rattachement distincts. La figure 2 illustre, à des fins de simplification, un seul module spécifique UTP affecté à un secteur de rattachement.

On supposera ici que la borne fixe primaire possède la référence BFR1 tandis que trois bornes fixes voisines de la borne BFR1 possèdent respectivement les références BFR2 BFR3 et BFR4. La borne fixe secondaire qui sera choisie est supposée être ici la borne BFR2.

On admet également que dans cette configuration les bornes fixes du réseau sont directement raccordées aux canaux téléphoniques CTPU et qu'une unité de raccordement primaire URB1 gère les bornes fixes BFR1 et BFR3 par les liaisons spécialisées respectives CCS1 et CCS3 tandis qu'une unité de raccordement de bornes secondaire URB2 gère les bornes fixes BFR2 et BFR4 par des liaisons spécialisées respectives CCS2 et CCS4.

Les premier et deuxième blocs d'interfaces, raccordés aux canaux téléphoniques CTPU du réseau, comportent une pluralité de cartes de numérisation des signaux téléphoniques, portant les références MIC4, ..., MIC11. Ces cartes sont par exemple celles commercialisées par la Société française AETA sous la référence ES0290.

Les moyens d'interconnexion sont ici matérialisés par deux bus de liaison numériques BMIC3 et BMIC4 entre les différentes cartes MICi.

Chaque bus BMICi a une capacité de 2 mégabits par seconde.

Une carte SIGM analyse les numéros de téléphone reçus des canaux téléphoniques CTPU en début de communication. L'homme de métier sait réaliser une telle carte, par exemple en utilisant des décodeurs (de numéros de téléphone codés selon la norme CCITT Q23) tels que ceux commercialisés par la Société britannique PLESSEY sous la référence MV8870DP.

Il est également prévu un bloc d'interfaces numérique JONM relié aux canaux numériques CNPU. Ce bloc d'interfaces comprend ici par exemple une carte telle que celle commercialisée par la Société MOTOROLA sous la référence MVME333. Il est ainsi possible de réaliser une interface numérique conformément à la norme internationale CCITT X25.

Les moyens de traitement spécifiques UCM sont reliés au bloc JONM, à la carte SIGM et aux cartes MICi par un bus de liaison BUCM. Matériellement ceux-ci peuvent être réalisés par la carte commercialisée par la Société MOTOROLA sous la référence MVME 117A à base du processeur MOTOROLA 68010 incorporant la partie logicielle de ces moyens de traitement, auquel est associée une mémoire vive dynamique de 2 mégaoctets.

Chaque bus BMICi est propre à véhiculer des données numériques selon une trame subdivisée en une pluralité d'intervalles temporels, typiquement 32, référencés IT0...IT31. Le premier intervalle temporel IT0 et le dix-septième intervalle temporel IT16 sont des intervalles de signalisation tandis que les autres intervalles temporels sont utilisés pour les différents canaux téléphoniques.

Alors que l'intervalle de signalisation IT0 est utilisé à des fins de synchronisation, l'intervalle de signalisation IT16 est utilisé pour l'attribution d'une ligne téléphonique concernant un appel entrant ou sortant du module UTP.

Aussi, les moyens de traitement spécifiques sont-ils propres à agir sur cet intervalle de signalisation IT16 pour permettre la réception ou l'émission d'un appel téléphonique en ou depuis les premier et deuxième blocs d'interface MICi.

Le module UTP comporte enfin des moyens d'alimentation ALSM et ALCM capables de fournir des tensions de ⁺ ₋ 5 Volts à partir de la tension de 48 Volts délivrée par le réseau téléphonique commuté CTPU.

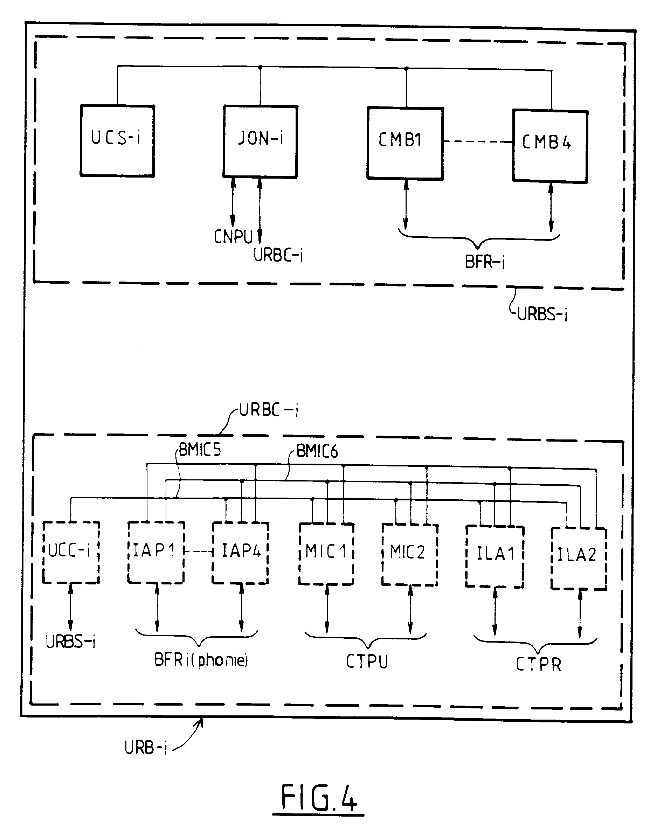

La figure 4 illustre schématiquement le synoptique d'une unité de raccordement de bornes URB-i. Le suffixe i est à affecter de la valeur 1 lorsqu'il s'agit de l'unité de raccordement primaire URB1, et de la valeur 2 lorsqu'il s'agit de l'unité de raccordement secondaire URB2.

L'unité de raccordement de bornes URB-i comporte une unité de signalisation URBS-i et une unité de commutation URBC-i ainsi que des moyens d'alimentation de ces deux unités, non représentés ici, à des fins de simplification.

L'unité de signalisation URBS-i incorpore ici les moyens de transfert tandis que l'unité de commutation URBC-i n'est pas utilisée dans cette variante et sera décrite plus en détail ci-après.

Les moyens de transfert comportent des moyens d'interface numérique JON-i reliés aux canaux numériques du réseau ainsi qu'à l'unité de commutation URBC-i, et qui peuvent être réalisés de façon analogue au bloc d'interfaces numérique JONM du module UTP.

Ces moyens de transfert comportent également une pluralité de cartes d'interface CMB1-i...CMB4-i réalisant une interface de signalisation avec les bornes fixes BFR. Ces cartes CMB-i peuvent être par exemple celles réalisées à partir des cartes commercialisées par la Société des Etats-Unis FORCE COMPUTER INC. sous la référence SYS68K/ISIO-1/1A, associées à des modems classiques.

A ces différentes interfaces numériques est associée une unité de traitement de signalisation UCS-i reliée aux cartes JON-i et CMB-i par un bus de liaison BUCS-i. L'unité de traitement de signalisation est réalisée par exemple de façon analogue aux moyens de traitement spécifiques UCM, à base du processeur MOTOROLA 68010 qui incorpore la partie logicielle des moyens de transfert.

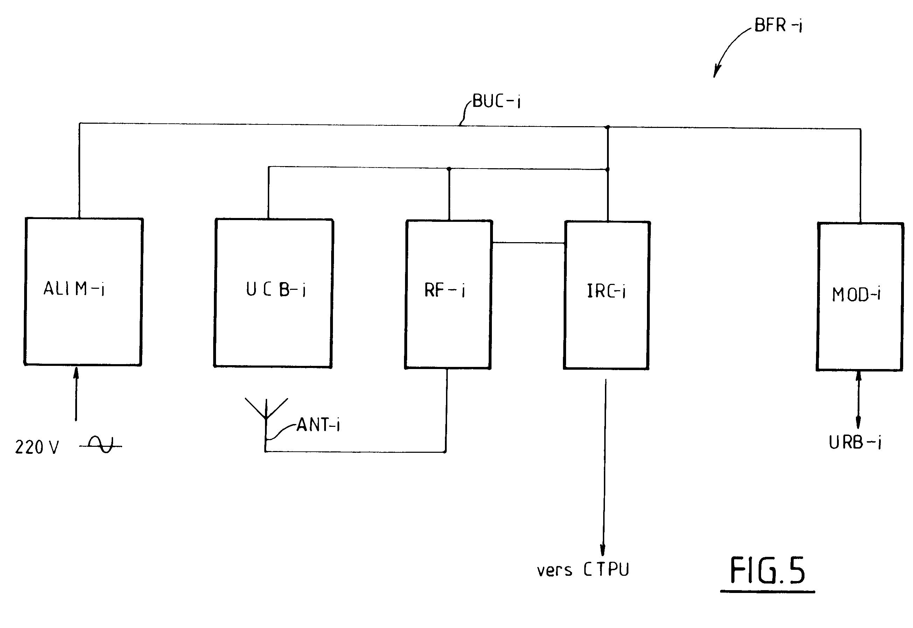

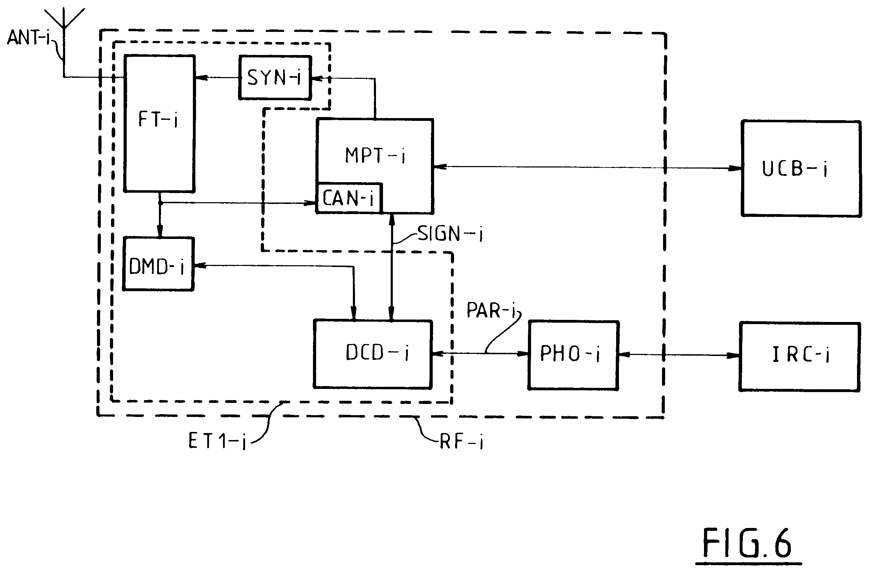

Les figures 5 et 6 illustrent synoptiquement et schématiquement la constitution d'une borne fixe BFR-i.

Les structures des bornes fixes BFR du réseau sont analogues. Aussi, les différents constituants de cette borne fixe ont des références affectées du suffixe i. Ce suffixe i prend la valeur 1 lorsqu'il s'agit d'un élément dit "primaire" c'est-à-dire associé à la borne fixe primaire, et la valeur 2 lorsqu'il s'agit d'un élément dit "secondaire" affecté à la borne secondaire.

Dans la suite du texte, les qualificatifs primaire et secondaire peuvent être parfois supprimés et sous-entendus, à des fins de simplification.

Les bornes fixes primaire BFR1 et secondaire BFR2 incorporent respectivement les moyens de traitement-borne primaires et secondaires, les premiers étages d'interfaces primaire ET1-1 et secondaire ET1-2, les deuxièmes étages d'interfaces primaire MOD-1 et secondaire MOD-2 ainsi que les troisièmes étages d'interfaces primaire IRC-1 et secondaire IRC-2.

La borne fixe BFR-i comporte un bloc d'alimentation ALIM-i délivrant les tensions plus et moins 5 Volts à partir d'une tension d'entrée 220 Volts alternative. Il est également prévu une unité de traitement-borne UCB-i, qui peut être réalisée de façon analogue à l'unité de traitement de signalisation.

Le deuxième étage d'interface MOD-i est par exemple réalisé à partir d'une carte analogue à celle utilisée pour les cartes CMB-i. Cette carte permet l'interface de liaison de signalisation avec l'unité de raccordement de bornes URB-i correspondante.

Un module radiofréquence RF-i est relié à un troisième étage d'interface IRC-i ainsi qu'à l'unité de traitement-borne UCB-i et à l'antenne ANT-i de la borne BFR-i.

La carte IRC-i comporte un module d'interface numérique avec le module RF-i, suivi d'un bloc convertisseur numérique/ analogique et analogique/numérique réalisé par exemple à base de composants tels que ceux commercialisés par la Société SGS-THOMSON sous la référence ETC 5067. Ce bloc convertisseur est lui-même suivi d'un module d'interface ligne d'abonné analogique avec les canaux CTPU conforme aux spécifications de raccordement du réseau téléphonique commuté.

Enfin, un bus de liaison BUC-i permet de relier les différents constituants de cette borne entre eux.

Tel qu'illustré sur la figure 6, le module RF-i comporte un étage de changement de fréquence FT-i relié à l'antenne ANT-i, suivi d'un circuit de démodulation de signaux DMD-i puis d'un circuit décodeur de signaux DCD-i.

Ce décodeur DCD-i est propre à discriminer d'une part des signaux de signalisation communiqués par une liaison SIGN-i à un bloc de traitement MPT-i, et des signaux de parole communiqués par une autre liaison PAR-i à un bloc PHO-i réalisant l'interface avec la carte IRC-i.

Le bloc de traitement MPT-i est relié à l'unité de traitement-borne UCB-i ainsi qu'à un synthétiseur SYN-i raccordé par ailleurs à l'étage de changement de fréquence FT-i pour la sélection du canal radiofréquence sur lequel s'établit le lien radiofréquence.

Un tel module RF-i est par exemple celui actuellement disponible auprès de la Demanderesse sous la référence DTRF GPT- FT Equipment.

On peut considérer fonctionnellement que le premier étage d'interface ET1-i englobe les deux étages de changement de fréquence, les circuits de démodulation et de décodage des signaux ainsi que le synthétiseur.

Les moyens de traitement-borne ainsi que les premier et deuxième moyens d'analyse comportent des modules logiciels incorporés au sein des blocs UCB-i et MPT-i.

Considérons maintenant le cas d'une communication téléphonique établie depuis la station autonome SA vers la station fixe SF.

Lorsque l'usager se connecte au réseau POINTEL, par action sur le clavier de son combiné SA, les moyens d'analyse-station communiquent, à l'attention de la borne fixe BFR1, qui sera supposée ici être la borne fixe primaire, l'identifiant LID du réseau POINTEL ainsi que l'identifiant PID du combiné portatif. L'appel téléphonique en provenance du combiné portatif SA peut être pris en compte par la borne fixe BFR1 car les moyens de traitement-borne primaires de celle-ci connaissent déjà l'identifiant LID du réseau POINTEL. Le numéro de téléphone de la station appelée, également composé sur le clavier du combiné, ainsi que l'identifiant PID de ce combiné portatif sont transmis par l'intermédiaire de l'unité de raccordement primaire URB1 et des canaux numériques du réseau au centre d'autorisation POINTEL CAP pour vérification.

Lorsque cette vérification est effectuée, les moyens de transfert de l'unité de raccordement primaire URB1 établissent une liaison numérique avec le module spécifique UTP par l'intermédiaire des canaux numériques du réseau. Cette liaison numérique a pour but de solliciter de la part des moyens de traitement spécifiques du module UTP un numéro d'appel de ce module spécifique UTP par l'intermédiaire du réseau téléphonique commuté CTPU. Ce numéro téléphonique d'appel est référencé ABPQMCDU.

Ce numéro d'appel ABPQMCDU est associé de façon biunivoque à l'identifiant PID de la station autonome et est communiqué à l'unité de raccordement URB1 en retour par les canaux numériques du réseau.

Les moyens de transfert de l'unité URB1 communiquent alors par la ligne de signalisation de la liaison spécialisée CCS1, le numéro d'appel ABPQMCDU ainsi que l'autorisation du centre d'autorisation POINTEL CAP, aux moyens de traitement-borne primaires de la borne BFR1.

Le lien radiofréquence primaire est donc maintenu entre le combiné portatif SA et cette borne fixe et est caractérisé comme évoqué plus haut par l'identifiant de liaison LID1, associé de façon biunivoque à ce lien, et différent de l'identifiant de réseau LID.

Les moyens de traitement-borne primaires communiquent alors à l'unité de raccordement URB1 cet identifiant de liaison LID1. Les moyens de transfert de cette unité de raccordement diffusent alors par l'intermédiaire des canaux numériques du réseau et des liaisons spécialisées à toutes les bornes voisines BFR2, BFR3, BFR4 de la borne BFR1, l'identifiant de liaison INFL contenant l'identifiant LID1, ainsi que le numéro d'appel ABPQMCDU du module spécifique et l'identifiant du combiné autonome PID.

Revenons maintenant à l'établissement de la liaison primaire entre la borne BFR1 et la station fixe SF.

Les moyens de traitement-borne primaires appellent le module spécifique UTP par l'intermédiaire du réseau téléphonique commuté CTPU, à l'aide du numéro d'appel ABPQMCDU. En fait, seule la partie MCDU de ce numéro d'appel est analysée et utilisée par le module UTP.

Ce "demi-appel" de la borne fixe BFR1 vers le module spécifique est reçu en la première interface du deuxième bloc d'interfaces de ce module, et va contribuer à l'établissement dudit lien téléphonique primaire.

Les moyens de traitement spécifiques du module UTP allouent alors par l'intermédiaire des bus BMIC-i, la première interface du premier bloc d'interfaces afin de réserver une ligne téléphonique pour le deuxième "demi-appel" depuis le module spécifique UTP vers la station SF, ce qui va contribuer à l'établissement dudit lien téléphonique-station.

Lorsque cette allocation est effectuée, le réseau téléphonique commuté envoit, par l'intermédiaire des moyens de traitement spécifique du module UTP, une tonalité d'appel aux moyens de traitement-borne primaires de la borne BFR1, et réalisent l'interconnexion entre les premières interfaces des premier et deuxième blocs d'interfaces des moyens de raccordement.

Les moyens de traitement-borne primaires composent alors le numéro de téléphone de la station appelée SF ce qui aura pour conséquence de mettre en communication téléphonique la station SA avec cette station SF.

En cours de communication téléphonique, lorsque par exemple l'usager se déplace et sort de la zone de couverture radio de la borne BFR1, ou bien s'il y a une interférence radio quelconque, les moyens de traitement-station du combiné vont détecter la baisse de niveau du signal radiofréquence primaire, notamment lorsque ceux-ci ne reçoivent plus lapartie spécifique du message téléphonique (on est donc en présence ici de ladite condition-station prédéterminée).

Dans ce cas, les moyens de traitement-station vont diffuser sur les différents canaux radio, l'information de requête, c'est-àdire l'identifiant de liaison LID1.

Toutes les bornes fixes BFR2, BFR3 et BFR4, voisines de la borne BFR1, sont aptes à reconnaître l'identifiant de liaison LID1 puisque leurs moyens de traitement-borne respectifs en ont eu connaissance au préalable.

On supposera maintenant que l'usager s'étant rapproché de la borne BFR2, c'est cette dernière borne qui reçoit l'identifiant LID1 et qui est donc choisie dans le groupe de bornes voisines pour être la borne fixe secondaire.

A la réception de cet identifiant de liaison LID1, les moyens de traitement-borne secondaires de la borne fixe secondaire sont propres à envoyer un signal d'appel secondaire en ladite deuxième interface du deuxième bloc, à l'aide du numéro d'appel ABPQMCDU du module spécifique, ce qui va contribuer à l'établissement dudit lien téléphonique secondaire. En pratique, seule la partie MCDU de ce numéro d'appel est transmise par le réseau téléphonique commuté CTPU au module UTP.

A la réception de ce signal d'appel secondaire en la deuxième interface du deuxième bloc d'interfaces du module spécifique UTP, les moyens de traitement spécifiques réalisent l'interconnexion entre la première interface du premier bloc d'interfaces et cette deuxième interface. La relation téléphonique entre la station autonome SA et la station fixe SF est ainsi commutée et la continuité de service est offerte à l'usager.

Afin d'éviter un basculement intempestif entre deux bornes primaires, et pour laisser éventuellement le temps à la borne fixe primaire BFR1 de reprendre un lien radiofréquence interrompu, notamment dans le cas d'un combiné autonome se trouvant équidistant de deux bornes fixes, il est préférable que les moyens de traitement-borne secondaires de la borne fixe secondaire BFR2 ne transmettent ledit signal d'appel secondaire qu'après une durée de temporisation prédéterminée, typiquement de l'ordre de 3 secondes, débutant à la première réception dudit indentifiant de liaison LID1 en ledit premier étage secondaire de cette borne fixe secondaire BFR2. On rappelle en effet que les moyens de traitement-station sont aptes à émettre l'identifiant de liaison à intervalles réguliers jusqu'à réception de celui-ci par l'une des bornes fixes.

Considérons maintenant le cas où la station fixe SF souhaite établir une communication téléphonique vers la station autonome SA.

Afin que le combiné autonome SA puisse être appelé, en n'importe quel lieu géographique, il convient qu'il puisse être localisé vis-à-vis d'une borne fixe choisie. Cette information de localisation est stockée dans des moyens formant base de données BDP associés à chaque module spécifique UTP et contenus par exemple dans la mémoire vive dynamique de 2 mégaoctets du processeur MOTOROLA 68010. Cette base de données BDP comporte, outre l'information de localisation de la borne fixe choisie, ici la borne BFR1, et donc de la station autonome SA, la correspondance entre le numéro d'appel de ce combiné SA et son identifiant physique PID.

Cette information de localisation résulte d'un dialogue de localisation entre le combiné autonome SA et la borne choisie BFR1.

La Demanderesse préfère actuellement envisager le principe d'une localisation volontaire de la part d'un abonné souhaitant recevoir des appels téléphoniques sur son combiné autonome. On suppose que c'est le cas ici de l'usager porteur de cette station autonome SA. Ce souhait est enregistré dans la base de données BDP associée au module UTP. Il est également possible d'associer à ce souhait une durée maximale pendant laquelle l'abonné souhaite effectivement recevoir des appels téléphoniques. Une station autonome appelable sera donc équipée de moyens propres à signifier le refus ou l'acceptation de recevoir des appels téléphoniques. Une telle station autonome pourra ainsi manifester effectivement son intention de recevoir des appels.

Le dialogue de localisation peut être alors dans ce cas, soit l'émission depuis la station autonome SA vers la borne fixe BFR1 choisie par ce combiné d'un signal de localisation. Ce peut être également une communication téléphonique (entrante ou sortante) entre ce combiné et cette borne choisie.

Pratiquement, la base de données BDP stocke, en correspondance du numéro d'appel du combiné autonome, l'identification numérique (par exemple l'adresse), sur les canaux numériques, de l'unité de raccordement de bornes URB1 ayant réalisé la dernière localisation à partir d'un signal de localisation émis par le combiné, ainsi qu'une désignation, par exemple le numéro, de la borne fixe BFR1 choisie où a eu lieu cette dernière localisation. Chaque base de données BDP (ici associée à un module UTP) possède une adresse permettant de la contacter sur les canaux numériques CNPU.

En réponse à une demande d'appel téléphonique d'une station fixe appelante SF sur le réseau téléphonique commuté CTPU, les moyens de traitement spécifiques du module UTP vont établir une liaison de commande avec la borne fixe choisie. Cette liaison de commande comporte, après consultation de la base de données BDP correspondante, une liaison numérique entre le module UTP et l'unité de raccordement de bornes URB1 dont l'adresse correspond à l'information de localisation. Plus précisément, l'établissement de cette liaison de commande comporte l'émission d'un signal numérique depuis le module spécifique UTP vers la borne choisie BFR1 par l'intermédiaire de son unité de raccordement URB1. Ce signal numérique comporte, outre l'identification de la borne BFR1, un ordre d'appel radio de la station autonome SA par cette borne BFR1, ainsi que le numéro téléphonique d'appel ABPQMCDU du module spécifique UTP par cette borne BFR1.

Cet appel téléphonique de la borne BFR1 vers les moyens de traitement spécifiques du module UTP est soumis à la satisfaction de conditions prédéterminées supplémentaires.

Une première condition prédéterminée supplémentaire peut être la vérification de la capacité effective de la borne fixe BFR1 à coopérer avec le combiné. Cette vérification peut inclure par exemple le contrôle du bon fonctionnement de cette borne ou bien sa capacité à atteindre par ondes radio le combiné autonome SA.

Une autre condition prédéterminée supplémentaire peut être également la vérification de la présence effective de l'abonné prêt à accepter l'appel téléphonique.

Par ailleurs, le lien téléphonique-station a été établi entre la station fixe SF et la première interface du premier bloc d'interfaces du module UTP.

Lorsque la borne BFR1 a appelé le module UTP pour l'établissement dudit lien téléphonique primaire, cet appel étant reçu en la première interface du deuxième bloc d'interfaces, les moyens de traitement spécifiques réalisent l'interconnexion de ces deux interfaces pour établir la relation téléphonique.

Comme précédemment, parallèlement à cet établissement, les moyens de transfert communiquent aux bornes voisines BFR2, BFR3 et BFR4 de la borne BFR1 l'identifiant de liaison LID1 ainsi que le numéro d'appel ABPQMCDU du module UTP afin qu'éventuellement cette relation téléphonique puisse être commutée en passant pas une borne voisine de la borne BFR1.

Il convient également de remarquer que, lorque l'interconnexion est effectivement réalisée au sein du module spécifique UTP, les liens téléphoniques primaire et éventuellement secondaire entre la station autonome et le module spécifique sont enregistrés comme étant à charge de l'abonné porteur du combiné autonome afin de le facturer en conséquence. Le lien téléphonique-station établi entre la station fixe et le module UTP est enregistré comme étant à charge de cette station fixe aux fins de sa facturation.

Dans le cas d'un appel téléphonique provenant de la station autonome vers la station fixe tous les liens téléphoniques établis sont à la charge de l'appelant.

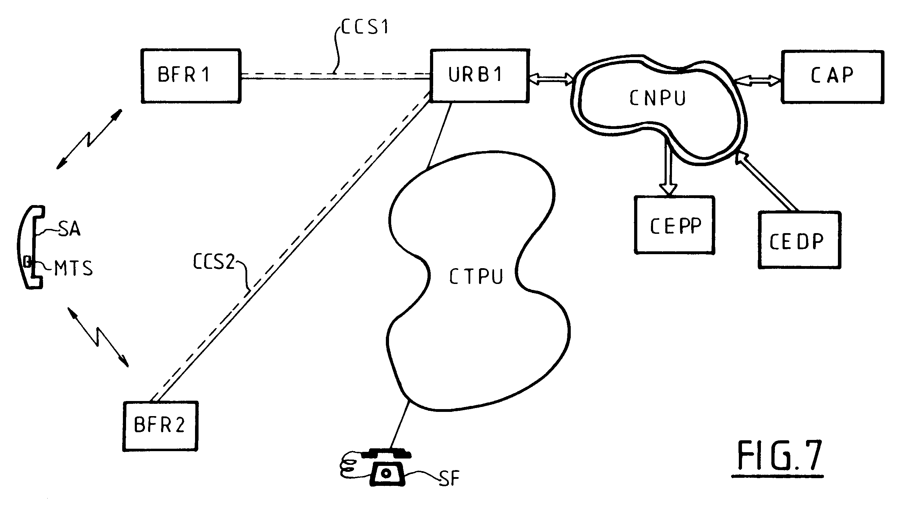

On se réfère maintenant à la figure 7 qui illustre une deuxième configuration de réseaux dans laquelle ne sont pas prévus des modules spécifiques UTP. Par contre, les premier et deuxième blocs d'interfaces, les moyens d'interconnexion et les moyens de traitement spécifiques sont incorporés dans certaines au moins des unités de raccordement du réseau, en pratiques dans toutes les unités de raccordement. Les autres moyens du dispositif selon l'invention restent, dans cette variante, implantés comme précédemment décrit.

On suppose également ici que les bornes fixes ne sont pas raccordées directement aux canaux téléphoniques du réseau CTPU mais par l'intermédiaire de leur unité de raccordement respective.

Pour la simplicité de l'exposé on supposera également ici que les bornes fixes primaire et secondaire BFR1 et BFR2 sont toutes deux raccordées par des liaisons spécialisées respectives CCS1 et CCS2 à l'unité de raccordement URB1.

Si l'on revient maintenant à la figure 4, on remarque que l'unité de commutation URBC-i de l'unité de raccordement URB-i (ici URB1) comporte outre la pluralité de cartes MIC-1, MIC-2 de numérisation des signaux téléphoniques, formant le premier bloc d'interfaces, une pluralité de cartes d'interfaces de phonie spécialisées IAP1...IAP4 propres à être raccordées aux bornes fixes primaire et secondaire par les liaisons spécialisées CCS1 et CCS2.

Ces cartes IAPi comportent une interface avec des bus de liaison BMIC5 et BMIC6, suivie d'un bloc convertisseur analogue à celui utilisé dans la carte IRC-i, suivi à son tour d'une interface téléphonique (limitée à la phonie) sur liaison spécialisée avec les bornes.

Le premier bloc d'interfaces comporte également une pluralité de cartes ILA1, ILA2 propres à réaliser une interface de raccordement à des canaux téléphoniques CTPR d'un réseau de communication privé.

Ces cartes présentent une structure analogue aux cartes IAPi, l'interface téléphonique sur liaison spécialisée étant remplacée par une interface ligne d'abonné analogique avec les canaux CTPR conforme aux spécifications de raccordement du réseau téléphonique commuté.

L'ensemble de ces cartes sont reliées entre elles par des bus de liaison BMIC5 et BMIC6 ainsi qu'à une unité de traitement de commutation UCC-i reliée à l'unité de traitement de signalisation UCS-i.

Cette unité de traitement de commutation est par exemple réalisée à l'aide de la carte MVME 117A (déjà évoquée), incorporant l'une des parties logicielles des moyens de traitement spécifiques.

Lorsque, dans le cas d'une communication téléphonique établie depuis la station autonome SA vers la station fixe SF, l'usager compose le numéro de téléphone de cette station fixe, sur le clavier de son combiné SA, la procédure de vérification est effectuée en liaison avec le centre CAP, de manière analogue à celle décrite ci-avant.

Lorsque l'autorisation est accordée par ce centre CAP, le lien radiofréquence primaire est maintenu entre le combiné portatif SA et la borne fixe et est caractérisé de façon analogue à celle évoquée plus haut par l'identifiant de liaison LID1.

Les moyens de traitement spécifiques de l'unité de raccordement URB1 allouent alors, par l'intermédiaire des bus BMIC, la première interface du premier bloc d'interfaces afin de réserver une ligne téléphonique pour le demi-appel depuis l'unité de raccordement vers la station SF, afin de contribuer à l'établissement dudit lien téléphonique-station.

En parallèle, les moyens de traitement spécifiques allouent, par l'intermédiaire des cartes IAP-i la première interface du deuxième bloc d'interfaces contribuant à l'établissement du lien téléphonique primaire.

Lorsque ces allocations sont effectuées, les moyens de traitement spécifiques transmettent, par l'intermédiaire d'une carte CMB-i et de la voie de signalisation de la liaison spécialisée CCS1, une tonalité d'appel émise par les canaux CTPU, aux moyens de traitement-borne primaires de la borne BFR1, et réalisent l'interconnexion entre les premières interfaces des premier et deuxième blocs d'interfaces.

Les moyens de traitement-borne primaires composent alors le numéro de téléphone de la station appelée SF, ce qui aura pour conséquence de mettre en communication téléphonique la station SA avec la station SF.

En cours de communication téléphonique, las premier et deuxième moyens d'analyse, formés ici de modules logiciels incorporés au sein de l'unité de raccordement de bornes URB1, analysent respectivement le niveau du signal radiofréquence primaire échangé entre le poste autonome et le premier étage d'interface de la borne primaire BFR1, et le niveau de l'activité radiofréquence, résultant de la transmission du signal radiofréquence primaire, sur les canaux radiofréquence des bornes voisines, homologues du canal radiofréquence du premier étage primaire sur lequel est transmis ledit signal radiofréquence primaire.

On suppose pour cela bien entendu qu'au moins une des bornes voisines n'est pas saturée, c'est-à-dire que tous ses canaux radio ne sont pas déjà utilisés pour d'autres liens radiofréquence avec d'autres stations autonomes.

Lorsque le niveau du signal radio primaire franchit un seuil prédéterminé, par exemple devient inférieur à -80 dBm, et lorsque, parallèlement, le niveau de l'activité radiofréquence sur l'une des bornes voisines devient supérieur à un autre seuil prédéterminé, par exemple de l'ordre de - 60 dBm, cette borne (supposée être la borne BFR2) va être sélectionnée pour commuter la relation téléphonique en cours.

Pour cela, les moyens de transfert vont communiquer alors à cette borne BFR2 l'identifiant de liaison LID1. Les moyens de traitement spécifiques vont alors allouer, par l'intermédiaire d'une carte IAP-i, une liaison phonie entre cette borne BFR2 et l'unité de raccordement de bornes.

A la réception de l'identifiant de liaison LID1 émis par la station autonome, un canal va être sélectionné sur lequel va s'établir le lien radiofréquence secondaire, et les moyens de traitement spécifiques vont rompre la liaison phonie entre la première interface du deuxième bloc d'interfaces (au niveau d'une carte IAP-i) et la borne primaire BFR1 puis réaliser l'interconnexion entre la deuxième interface de ce deuxième bloc d'interfaces et la première interface du premier bloc d'interfaces reliées à la station fixe SF.

Afin d'éviter que la borne BFR1 reprenne la liaison radio (puisqu'elle reçoit aussi l'identifiant LID1 émis par le combiné portatif) pour engendrer aussitôt une nouvelle commutation vers la borne BFR2, on peut prévoir d'envoyer un signal à la borne BFR1 lui interdisant de reconnaître l'identifiant LID1. Ainsi, seule la borne BFR2 pourra reprendre la liaison radio.

Pour l'usager, la commutation de cette relation téléphonique est perçue comme un réétablissement de la liaison radio. On remarquera également que la voie sortante n'est par contre pas modifiée. Il n'y a donc pas de rupture du lien téléphonique-station vers la station fixe SF.

On a supposé ici que l'identifiant de liaison LID1 était communiqué à la borne fixe secondaire après l'analyse effectuée par les premier et deuxième moyens d'analyse. On pourrait également envisager que, parallèlement à l'établissement de la liaison primaire passant par la borne fixe primaire, l'unité de raccordement de bornes diffuse déjà l'identifiant de liaison LID1 aux autres bornes voisines, c'est-à-dire avant de choisir une borne fixe secondaire.

L'invention permet d'assurer une continuité de service, non seulement lorsque l'usager se déplace, mais aussi lorsque l'environnement extérieur perturbe la liaison radio avec une borne, en choisissant une autre borne moins "perturbée", et ce à l'initiative de la station autonome.

L'invention n'est pas limitée aux modes de réalisation ci-dessus décrits mais en embrasse toutes les variantes contenues dans le cadre des revendications ci-après, notamment les suivantes :
- les deux modes de réalisation décrits, à base de modules spécifiques et sans modules spécifiques, ne sont pas incompatibles. On pourrait à ce titre envisager une configuration de réseau dans laquelle certains secteurs géographiques seraient équipés de modules spécifiques et d'autres secteurs géographiques contiendraient les moyens spécifiques incorporés dans les unités de raccordement de bornes;
- le module spécifique UTP, ou bien une unité de raccordement, pourrait être également raccordé à un réseau de communication privé contenant également des canaux téléphoniques privés et des canaux numériques privés;
- il n'est également pas exclu que l'on puisse envisager d'utiliser, dans la deuxième variante décrite, le type de conditions prédéterminées et/ou de critères de sélection utilisés dans la première variante, et inversement;
- il est également possible d'inclure, au sein du module UTP ou d'une unité de raccordement, une carte permettant l'émission de messages enregistrés et de mise en attente vers les usagers appelant. Cette carte pourrait être équipée de générateurs de synthèse vocale associés à des mémoires.
- On pourrait bien sûr envisager des appels téléphoniques provenant d'une station autonome appelante vers une station autonome appelable. Dans ce cas, l'une des bornes fixes coopérant avec l'une des stations autonomes appelante ou appelée joue le rôle de la station fixe SF décrite ci-avant.
- Plus généralement, une station autonome n'est pas limitée à un combiné téléphonique mais concerne tout objet capable de coopération avec une borne fixe.

Bien entendu, certains des moyens décrits ci-dessus peuvent être omis dans les variantes où ils ne servent pas.

## Revendications

1. Dispositif téléphonique, destiné à servir dans un réseau de communication entre stations fixes et bornes fixes, lesdites stations fixes étant reliées aux canaux téléphoniques tandis que les bornes fixes comportent une antenne pour la coopération mutuelle à distance avec des stations autonomes, caractérisé en ce qu'il comprend:
- des moyens d'interface avec les antennes d'une pluralité de bornes fixes,
- des moyens de raccordement aux canaux téléphoniques du réseau,
des moyens spécifiques, reliés aux moyens d'interface et de raccordement, propres à établir une relation téléphonique entre une station autonome (SA) et une autre station (SF) reliée aux canaux téléphoniques du réseau, par l'intermédiaire d'une liaison primaire entre la station autonome (SA) et les moyens de raccordement, via l'antenne d'une borne fixe primaire (BFR1), et à établir au moins une liaison secondaire entre la station autonome (SA) et lesdits moyens de raccordement, via l'antenne d'une borne fixe secondaire (BFR2), choisie en fonction de critères de sélection prédéterminés,
- des moyens d'analyse-station (MTS), incorporés dans la station autonome, propres à générer une information de requête prédéterminée en réponse à une condition-station prédéterminée relative à la liaison primaire,
et en ce que les moyens spécifiques sont propres à répondre à la réception de ladite information de requête, en commutant ladite relation téléphonique pour qu'elle passe par cette liaison secondaire.

2. Dispositif selon la revendication 1, caractérisé en ce que la borne fixe secondaire (BFR2) est sélectionnable parmi un groupe choisi de bornes voisines (BFR2, BFR3, BFR4) de la borne fixe primaire (BFR1).

3. Dispositif selon la revendication 1 ou 2, caractérisé en ce que les moyens d'interface comportent, avec respectivement les antennes des bornes fixes primaire et secondaire, des premiers étages d'interface primaire (ET1-1) et secondaire (ET1-2) pour une pluralité de canaux radiofréquences,
en ce que les moyens spécifiques comportent:
- des moyens de traitement-borne primaires (MPT-1;UCB-1), reliés audit premier étage d'interface primaire (ET1-1), propres à établir, au sein de ladite liaison primaire, un lien radiofréquence primaire entre la station autonome (SA) et l'antenne sur l'un au moins des canaux radiofréquences de cette borne fixe primaire (BFR1), à caractériser ce lien radiofréquence primaire de façon biunivoque par un identifiant de liaison (LID1), et à délivrer cet identifiant de liaison (LID1) à un deuxième étage d'interface primaire (MOD-1),
- des moyens de transfert (URBS) reliés à ce deuxième étage d'interface primaire (MOD), propres à recevoir ledit identifiant de liaison (LID1) et à communiquer à un deuxième étage d'interface secondaire (MOD-2) une information de liaison (INFL) contenant au moins cet identifiant de liaison (LID1), et
- des moyens de traitement-borne secondaires (MPT-2; UCB-2), reliés auxdits premier et deuxième étages d'interface secondaires (ET1-2;MOD-2), propres à établir, au sein de ladite liaison secondaire, un lien radiofréquence secondaire entre la station autonome (SA) et l'antenne sur l'un au moins des canaux radiofréquences de cette borne fixe secondaire (BFR2), à l'aide dudit identifiant de liaison (LID1).

4. Dispositif selon la revendication 3, caractérisé en ce que ladite information de requête contient l'identifiant de liaison (LID1).

5. Dispositif selon la revendication 3 ou 4, caractérisé en ce que les premier et deuxième étages d'interface primaires (ET1-1; MOD-1), ainsi que les moyens de traitement-borne primaires (MPT-1; UCB-1) sont incorporés dans la borne primaire, tandis que les premier et deuxième étages d'interface secondaires (ET1-2; MOD-2), ainsi que les moyens de traitement-borne secondaires (MPT-2; UCB-2) sont incorporés dans la borne secondaire.

6. Dispositif selon l'une des revendications 3 à 5, destiné à servir dans un réseau de communication comportant des unités de raccordement de bornes fixes reliées, d'une part respectivement à des groupes de bornes fixes, et d'autre part entre elles, caractérisé en ce que, les bornes fixes primaire et secondaire étant reliées à une (URB1) ou deux (URB1;URB2) unités de raccordement, les moyens de transfert (URBS) sont incorporés dans ladite ou lesdites unités de raccordement.

7. Dispositif selon la revendication 6, destiné à servir dans un réseau de communication muni en outre d'un milieu de communication numérique (CNPU), caractérisé en ce que la borne fixe primaire (BFR1) est reliée à une unité de raccordement primaire (URB1) tandis que la borne fixe secondaire (BFR2) est reliée à une unité de raccordement secondaire (URB2),
en ce que les moyens de transfert (URBS) comportent, au sein de l'unité de raccordement primaire, des moyens d'interface numérique primaires (JON-1) reliés au milieu de communication numérique du réseau, et, au sein de l'unité de raccordement secondaire, des moyens d'interface numérique secondaires (JON-2) reliés au milieu de communication numérique du réseau,
et en ce que les moyens de transfert (URBS) transmettent ladite information de liaison (INFL), entre les unités de raccordement primaire et secondaire, par l'intermédiaire du milieu de communication numérique et des moyens d'interface numérique primaires et secondaires.

8. Dispositif selon l'une des revendications 3 à 7, caractérisé en ce que les moyens de transfert (URBS) communiquent ladite information de liaison (INFL) à ladite borne fixe secondaire (BFR2) avant la réception de ladite condition prédéterminée

9. Dispositif selon les revendications 2 et 8 prises en combinaison, caractérisé en ce que les moyens de transfert (URBS) communiquent ladite information de liaison (INFL) à toutes les bornes dudit groupe avant la réception de ladite information de requête prédéterminée.

10. Dispositif selon l'une des revendications 3 à 7, caractérisé en ce que les moyens de transfert (URBS) communiquent ladite information de liaison (INFL) à ladite borne fixe secondaire (BFR2) après la réception de ladite information requête prédéterminée.

11. Dispositif selon l'une des revendications précédentes, caractérisé en ce que les moyens d'interface comportent un premier étage d'interface primaire (ET1-1) avec l'antenne de la borne fixe primaire (BFR1) pour une pluralité de canaux radiofréquences,
en ce que les moyens spécifiques comportent:
- des moyens de traitement-borne primaires (MPT-1; UCB-1), reliés audit premier étage d'interface primaire (ET1-1), propres à établir, au sein de ladite liaison primaire, un lien radiofréquence primaire entre la station autonome (SA) et l'antenne sur l'un au moins des canaux radiofréquences de cette borne fixe primaire (BFR1), ledit lien radiofréquence primaire comportant la transmission d'un signal radiofréquence primaire sur l'un au moins des canaux radiofréquences,
et en ce que ladite condition-station prédéterminée est relative à l'une au moins des caractéristiques dudit signal radiofréquence primaire.

12. Dispositif selon la revendication 11, caractérisé en ce que les moyens d'analyse-station (MTS), incorporés dans la station autonome (SA), sont propres à analyser la présence d'une partie spécifique du message téléphonique véhiculé par le signal radiofréquence primaire, et à effectuer une transmission radiofréquence de ladite information de requête (LDI1) en l'absence de cette partie spécifique.

13. Dispositif selon l'une des revendications précédentes, caractérisé en ce que les critères de sélection de ladite borne fixe secondaire comportent la réception en cette borne de ladite information de requête (LID1).

14. Dispositif selon l'une des revendications précédentes, caractérisé en ce que les moyens d'interface comportent, avec respectivement les antennes des bornes fixes primaire et secondaire, des premiers étages d'interface primaire (ET1-1) et secondaire (ET1-2) pour une pluralité de canaux radiofréquences,
en ce que les moyens spécifiques comportent:
- des moyens de traitement-borne primaires (MPT-1; UCB-1), reliés audit premier étage d'interface primaire (ET1-1), propres à établir, au sein de ladite liaison primaire, un lien radiofréquence primaire entre la station autonome (SA) et l'antenne sur l'un au moins des canaux radiofréquences de cette borne fixe primaire (BFR1), ledit lien radiofréquence primaire comportant la transmission d'un signal radiofréquence primaire sur l'un au moins des canaux radiofréquences,
- des premiers moyens d'analyse (MPT-1 ; CAN-1 ; DCD-1), propres à analyser, au niveau du premier étage primaire, au moins une première caractéristique déduite de ce signal radiofréquence primaire, et
- des deuxièmes moyens d'analyse (MPT-2; CAN-2; DCD-2) propres à analyser, au niveau dudit premier étage secondaire, au moins une deuxième caractéristique déduite du signal radiofréquence primaire,
et en ce que les critères de sélection de ladite borne fixe secondaire (BFR2) résulte de ces deux analyses.

15. Dispositif selon la revendication 14, caractérisé en ce que la première caractéristique comporte la détermination du niveau duditsignal radiofréquence primaire, tandis que la deuxième caractéristique comporte la détermination du niveau de l'activité radiofréquence, résultant de la transmission du signal radiofréquence primaire, sur le canal radiofréquence dudit premier étage secondaire, homologue du canal radio fréquence du premier étage primaire sur lequel est transmis ledit signal radiofréquence primaire.

16. Dispositif selon l'une des revendications précédentes, caractérisé
en ce qu'au moins les bornes fixes primaire et secondaire comportent respectivement des troisièmes étages d'interface primaire (IRC-1; MOD-1) et secondaire (IRC-2; MOD-2) reliés respectivement aux moyens de traitement-borne primaires et secondaires,
en ce que les moyens de raccordement comportent:
- un premier bloc d'interfaces (MICi) reliées aux canaux téléphoniques du réseau,
- un deuxième bloc d'interfaces reliées (MICi; IAPi) à certaines au moins des bornes fixes du réseau,
- des moyens d'interconnexion (BMICi) entre ces interfaces,
en ce que les moyens spécifiques comportent des moyens de traitement spécifiques (UCM; BUC-M) reliés à ces blocs d'interfaces ainsi qu'aux moyens d'interconnexion,
en ce que les moyens spécifiques sont propres à
établir un lien téléphonique-station entre une première interface du premier bloc et ladite autre station (SF), un lien téléphonique primaire entre le troisième étage d'interface primaire (IRC-1) de la borne primaire et une première interface du deuxième bloc, et un lien téléphonique secondaire entre le troisième étage d'interface secondaire (IRC-2) de la borne secondaire et une deuxième interface du deuxième bloc, et
établir ladite relation téléphonique en autorisant l'interconnexion entre la première interface du premier bloc et la première interface du deuxième bloc, puis à
autoriser l'interconnexion entre ladite première interface du premier bloc et la deuxième interface du deuxième bloc pour commuter ladite relation téléphonique.

17. Dispositif selon la revendication 16, caractérisé en ce que, lors d'une relation téléphonique depuis la station autonome (SA) vers ladite autre station (SF):
l'établissement dudit lien téléphonique primaire résulte d'un signal d'appel primaire depuis le troisième étage d'interface primaire (IRC-1) de la borne primaire vers le deuxième bloc d'interfaces,
les moyens de traitement spécifiques sont propres à allouer, en réponse à ce signal d'appel primaire, ladite première interface du premier bloc, puis à réaliser l'interconnexion entre cette première interface du premier bloc et la première interface du deuxième bloc et à transmettre un signal d'autorisation de numérotation à ladite borne fixe primaire (BFR1) afin que celle-ci compose le numéro de téléphone de ladite autre station (SF) appelée.

18. Dispositif selon la revendication 17, caractérisé en ce que les troisièmes étages d'interface primaire (IRC-1) et secondaire (IRC-2) sont reliés aux canaux téléphoniques du réseau tandis que le deuxième bloc d'interfaces est raccordé aux canaux téléphoniques du réseau.

19. Dispositif selon l'une des revendications 16 à 18, caractérisé en ce que les moyens de traitement-borne secondaires, incorporés dans la borne fixe secondaire (BFR2), sont propres à envoyer un signal d'appel secondaire en ladite deuxième interface dudit deuxième bloc, après la réception dudit identifiant de liaison (LID1) en ledit premier étage secondaire.

20. Dispositif selon la revendication 19, caractérisé en ce que, les moyens d'analyse-station émettant au moins une fois ledit identifiant de liaison (LID1), les moyens de traitement-borne primaires sont propres à envoyer ledit signal d'appel secondaire après une durée de temporisation prédéterminée débutant à la première réception dudit identifiant de liaison (LID1) en ledit premier étage secondaire.

21. Dispositif selon la revendication 14 et l'une des revendications 16 à 18 prises en combinaison, caractérisé en ce qu'en présence d'un niveau du signal radiofréquence primaire franchissant un seuil primaire prédéterminé, et en présence d'un niveau d'activité radiofréquence franchissant un seuil secondaire prédéterminé, les moyens de traitement spécifiques sont propres à transmettre aux moyens de traitement-borne secondaires (MPT-2; UCB-2) une information de commande pour permettre l'établissement dudit lien radiofréquence secondaire.

22. Dispositif selon l'une des revendications 16 à 21, caractérisé en ce qu'il comprend un module spécifique (UTP) incorporant au moins les premier et deuxième blocs d'interfaces, les moyens d'interconnexion et les moyens de traitement spécifiques.

23. Dispositif selon les revendications 3 et 22 prises en combinaison, destiné à servir dans un réseau de communication muni en outre d'un milieu de communication numérique, caractérisé en ce que le module spécifique (UTP) comporte un bloc d'interfaces numériques reliées audit milieu,
et en ce que les moyens de transfert (URBS) sont propres à communiquer ladite information de liaison (INFL) audit module par l'intermédiaire du milieu de communication numérique.

24. Dispositif selon la revendication 22 ou 23, caractérisé en ce que ladite information de liaison (INFL) comporte, outre ledit identifiant de liaison (LID1), un identifiant- station propre à la station autonome (SA) ainsi qu'un numéro d'appel téléphonique du module spécifique (UTP) propre à être reçu en ledit premier bloc d'interfaces de ce module spécifique (UTP).

25. Dispositif selon la revendication 24 prise en combinaison avec l'une des revendications 19 et 20, caractérisé en ce que les moyens de traitement-borne secondaires de la borne fixe secondaire (BFR2) envoient ledit signal d'appel secondaire à l'aide d'une partie au moins dudit numéro d'appel.

26. Dispositif selon l'une des revendications 22 à 25 prise en combinaison avec la revendication 18, caractérisé en ce que les moyens de traitement spécifiques sont propres à répondre à une demande d'appel téléphonique de ladite autre station (SF) vers la station autonome (SA), ladite demande d'appel étant reçue en ladite première interface du premier bloc d'interfaces:
en cherchant à établir, en plus du lien téléphonique-station, ledit lien téléphonique primaire entre le troisième étage d'interface primaire (ET1-1) de la borne fixe primaire (BFR1) et ladite première interface du deuxième bloc d'interfaces, en fonction de conditions supplémentaires prédéterminées, et à partir d'une information de localisation de ladite borne fixe primaire (BFR1).

27. Dispositif selon l'une des revendications 22 à 26, caractérisé en ce que les premier et deuxième bloc d'interfaces comportent une pluralité de cartes (MICi) de numérisation des signaux téléphoniques, reliées par au moins un bus de liaison (BMIC3, BMIC4) formant les moyens d'interconnexion,
en ce que ledit bus de liaison est propre à véhiculer des données numériques selon une trame subdivisée en une pluralité d'intervalles temporels ( IT0, ....IT31) comportant des intervalles utiles et des intervalles de signalisation (IT0; IT16),
et en ce que les moyens de traitement spécifiques sont propres à agir sur l'un au moins des intervalles de signalisation (IT16) pour permettre la réception ou l'émission d'un appel téléphonique en ou depuis les premier et deuxième blocs d'interface.

28. Dispositif selon l'une des revendications 16 à 21, prise en combinaison avec la revendication 6, caractérisé en ce que les premier et deuxième blocs d'interfaces, les moyens d'interconnexion et les moyens de traitement spécifiques sont incorporés dans certaines au moins des unités de raccordement du réseau.

29. Dispositif selon la revendication 28, caractérisé en ce que le deuxième bloc d'interfaces comporte une pluralité de cartes d'interfaces de phonie spécialisées propres à être raccordées aux bornes fixes primaire et secondaire par une liaison spécialisée,
et en ce que le premier bloc d'interfaces comporte une pluralité de cartes (MICi) de numérisation des signaux téléphoniques, reliées entr-elles et aux cartes d'interface de phonie par au moins un bus de liaison (BMIC3, BMIC4) formant les moyens d'interconnexion.

30. Dispositif selon l'une des revendications précédentes, caractérisé en ce que le réseau de communication est un réseau privé.

31. Dispositif selon l'une des revendications 1 à 29, caractérisé en ce que le réseau de communication est un réseau public.

32. Procédé d'interconnexion téléphonique, destiné à être mis en oeuvre dans un réseau de communication entre stations fixes et bornes fixes, lesdites stations fixes étant reliées aux canaux téléphoniques tandis que les bornes fixes comportent une antenne pour la coopération mutuelle à distance avec des stations autonomes, caractérisé en ce qu'on prévoit:
- des moyens de raccordement aux canaux téléphoniques du réseau,
- en ce qu'on établit une relation téléphonique entre une station autonome (SA) et une autre station (SF) reliée aux canaux téléphoniques du réseau, par l'intermédiaire d'une liaison primaire entre la station autonome (SA) et les moyens de raccordement, via l'antenne d'une borne fixe primaire (BFR1),
en ce qu'on choisit une borne fixe secondaire (BFR2) en fonction de critères de sélection prédéterminés,
en ce qu'on établit une liaison secondaire entre la station autonome (SA) et lesdits moyens de raccordement, via l'antenne de ladite borne fixe secondaire (BFR2),
en ce qu'en réponse à une condition-station prédéterminée, relative à ladite liaison primaire, on génère à partir de la station-autonome une information de requête prédéterminée (LID1),
et en ce qu'en réponse à la réception de ladite information de requête, on commute ladite relation téléphonique pour qu'elle passe par cette liaison secondaire.
